# FASCICULE DE BREVET EUROPEEN

(11) **EP 0 772 970 B1**
(45) Date de publication et mention de la délivrance du brevet: **27.03.2002**
(21) Numéro de dépôt: 96440097.2
(22) Date de dépôt: 06.11.1996
(51) Int. Cl.: A01D 78/10, A01D 69/08

(54) **Machine de fenaison, notamment une faneuse**
Heuwerbungsmaschine, insbesondere ein Zett-Wender
Haymaking machine, especially a tedder

(30) Priorité: 07.11.1995 FR 9513298
(43) Date de publication de la demande: 14.05.1997
(73) Titulaire: KUHN S.A., 67700 Saverne (FR)
(72) Inventeur: Troesch, Martial, 67440 Schwenheim (FR)
(74) Mandataire: Andres, Jean-Claude

(56) Documents cités:
- EP-A- 0 291 812
- EP-A- 0 317 746
- EP-A- 0 370 933
- EP-A- 0 541 516
- EP-A- 0 593 378
- DE-A- 1 482 771
- DE-A- 1 757 499
- DE-B- 1 266 556
- FR-A- 2 165 685
- FR-A- 2 467 535
- US-A- 3 670 913

## Description

La présente invention se rapporte à une machine de fenaison, notamment une faneuse, comportant un bâti de forme allongée qui porte plusieurs rotors munis de bras porte-outils qui s'étendent de telle sorte que leurs outils pénètrent dans l'intervalle entre deux outils de bras du ou des rotors voisins pour obtenir un recouvrement partiel de leurs trajectoires. Lesdits rotors sont entraînés en rotation durant le travail autour d'axes sensiblement verticaux ou légèrement inclinés dans la direction d'avancement, de manière à tourner deux à deux en convergence à l'avant, au moyen d'arbres de transmission logés dans le bâti. Ce bâti se compose d'une partie centrale et de parties latérales qui sont articulées aux extrémités de la partie centrale au moyen d'articulations ayant des axes sensiblement verticaux autour desquels elles peuvent être repliées vers l'arrière pour le transport. Les arbres de transmission qui servent à l'entraînement des rotors sont reliés entre eux au niveau des axes d'articulation des parties latérales du bâti par des accouplements formés par deux coupleurs munis d'un grand nombre de doigts d'entraînement qui engrènent durant le travail et qui sont écartés les uns des autres lorsque les parties latérales du bâti sont repliées pour le transport.

La machine connue dans la demande de brevet EP-A-0 541 516 comporte des parties latérales repliables vers le haut pour le transport. Un des coupleurs de chaque accouplement est monté coulissant sur son arbre de transmission. Ceci doit lui permettre de s'effacer lorsque les doigts des deux coupleurs butent les uns contres les autres lors de la mise en position de travail. Un tel montage coulissant est onéreux et sujet à de mauvais fonctionnements dus à l'environnement dans lequel travaille la machine. De plus, le nombre de doigts des coupleurs doit être égal au nombre des outils des rotors de la machine qu'ils équipent et doit être basé sur le rapport entre les pignons d'entraînement de ces rotors. Chaque machine doit ainsi avoir des coupleurs appropriés à ses rotors. De ce fait, la production de ces coupleurs, leur montage et la gestion des stocks sont relativement lourds et coûteux.

La présente invention a pour but de proposer une machine de fenaison n'ayant pas les inconvénients précités. En particulier, les accouplements entre les arbres de transmission servant à entraîner les rotors doivent être fiables, simples et faciles à utiliser.

A cet effet, une importante caractéristique de l'invention consiste en ce que chacun des accouplements entre les arbres de transmission possède des moyens de détermination de la position relative d'un coupleur par rapport à l'autre coupleur correspondant, lesquels moyens se composent de parties saillantes disposées dans le prolongement des extrémités en regard des arbres de transmission et ayant des formes qui leur permettent de s'emboîter dans une position prédéterminée dans laquelle les doigts des coupleurs peuvent engrener correctement lors de la mise en position de travail.

Cet agencement évite que les doigts des coupleurs butent les uns contre les autres. De ce fait, ils peuvent être fixes sur les arbres de transmission.

Grâce aux moyens de détermination de la position relative des coupleurs, les rotors qui sont entraînés par les arbres de transmission correspondants sont automatiquement correctement positionnés les uns par rapport aux autres lors de la mise en position de travail et ce, indépendamment du nombre de doigts des coupleurs.

En conséquence, les outils des rotors qui sont déplacés se situent toujours correctement dans les intervalles entre les outils du ou des rotors voisins dans la position de travail. En sus, ce positionnement est obtenu très facilement.

D'autres caractéristiques et avantages de l'invention ressortiront des revendications et de la description ci-après d'un exemple de réalisation non limitatif de l'invention avec références aux dessins annexés dans lesquels :
- La figure 1 représente une vue de dessus d'une machine selon l'invention en position de travail.
- La figure 2 représente une vue de dessus de la même machine en position de transport.
- La figure 3 représente une vue de détail de l'accouplement conforme à l'invention en position de travail.
- La figure 4 représente une vue de détail de l'accouplement en position de transport.

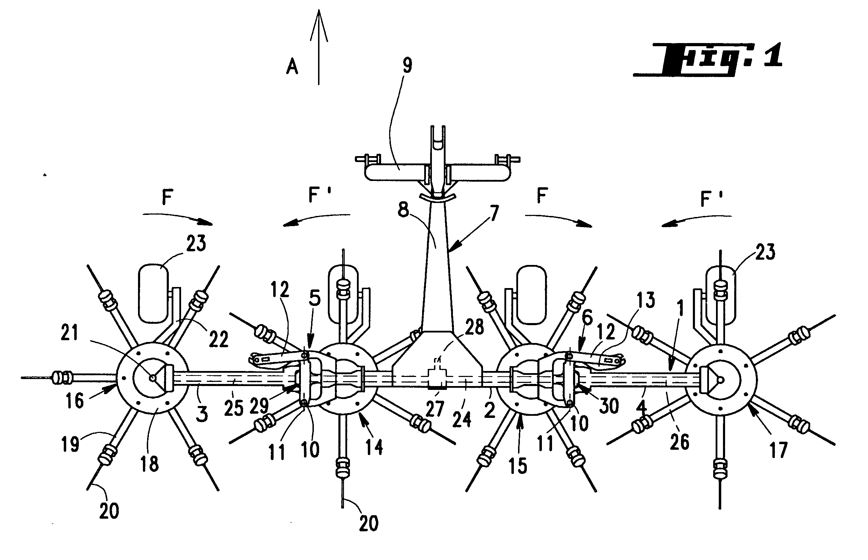

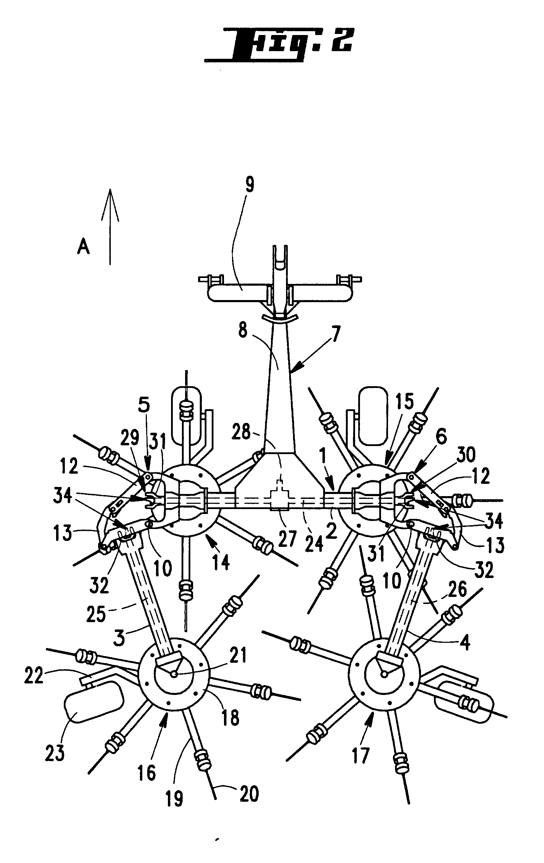

Telle qu'elle est représentée sur les figures 1 et 2, la machine de fenaison est une faneuse comportant un bâti (1) de forme allongée. Celui-ci se compose d'une partie centrale (2) et de deux parties latérales (3 et 4) qui sont articulées aux extrémités de la partie centrale (2) au moyen d'articulations (5 et 6). La partie centrale (2) porte un dispositif d'accrochage (7) à un tracteur qui n'est pas représenté et qui sert à animer et à déplacer la faneuse dans la direction d'avancement indiquée par la flèche (A). Ce dispositif d'accrochage (7) se compose d'une poutre (8) et d'une potence d'accouplement (9) du type trois points. Le dispositif d'accrochage (7) pourrait également être constitué par un timon dans le cas d'une faneuse dite traînée.

Chaque articulation (5, 6) entre la partie centrale (2) et les parties latérales (3 et 4) du bâti (1) présente un axe de pivotement (10) sensiblement vertical ainsi qu'un axe de pivotement (11) sensiblement horizontal. L'axe de pivotement (10) sensiblement vertical se situe sur le côté arrière du bâti (1). Il permet de replier la partie latérale (3 ou 4) correspondante vers l'arrière pour le transport (figure 2). L'axe de pivotement (11) sensiblement horizontal permet à la partie latérale (3 ou 4) correspondante de se déplacer en hauteur par rapport à la partie centrale (2) en vue de pouvoir suivre les dénivellations du sol. Cet axe (11) est réalisé en deux parties dont l'une se situe sur le côté avant et l'autre sur le côté arrière du bâti (1). Sur les figures annexées il n'y a que leurs axes géométriques qui sont représentés. Chaque partie latérale (3 ou 4) est en sus reliée à la partie centrale (2) au moyen de leviers de blocage (12 et 13). Ceux-ci se situent sur le côté avant du bâti (1). Ils permettent notamment d'arrêter les parties latérales (3 et 4) par rapport à la partie centrale (2) dans la position de travail et dans la position de transport.

La partie centrale (2) du bâti (1) porte deux rotors (14 et 15) de fanage, tandis que chaque partie latérale (3 et 4) porte un seul rotor (16 et 17) de fanage. La faneuse représentée possède ainsi un total de quatre rotors (14 à 17). On comprendra que ce nombre peut varier en fonction de la largeur de travail que doit avoir la faneuse.

Chaque rotor (14 à 17) possède un moyeu (18) sur lequel sont fixés des bras (19). Ces bras (19) s'étendent radialement et portent à leurs extrémités extérieures des outils de travail (20) constitués par des fourches. Ils sont agencés de telle sorte que les outils (20) de chaque rotor (14 à 17) pénètrent dans l'intervalle entre les outils (20) de deux bras (19) qui se suivent du ou des rotors (14 à 17) voisins. De cette manière les trajectoires des outils (20) se recouvrent partiellement. Ledit moyeu (18) de chaque rotor (14 à 17) est monté de manière à pouvoir tourner sur un axe support (21) qui est sensiblement vertical ou légèrement incliné dans la direction d'avancement (A). Les axes supports (21) des différents rotors (14 à 17) sont solidaires des parties (2, 3 et 4) du bâti (1). Chacun de ces axes (21) porte à son extrémité inférieure une colonne (22) avec une roue d'appui (23) pouvant rouler sur le sol.

Les rotors (14 à 17) peuvent être entraînés en rotation autour des axes (21) dans des sens (F et F') qui convergent sur le côté avant de la machine. A cet effet, chaque moyeu (18) possède une couronne dentée. Celle-ci engrène avec un pignon solidaire d'un arbre de transmission (24, 25 ou 26) qui est logé dans la partie (2, 3 ou 4) correspondante du bâti (1). L'arbre de transmission (24) qui est logé dans la partie centrale (2) passe dans un carter de renvoi (27) du bâti (1). Dans ce carter (27) il possède un pignon qui engrène avec un deuxième pignon solidaire d'un arbre (28) qui s'étend en direction du tracteur et peut être relié à l'arbre de prise de force de ce dernier par l'intermédiaire d'un arbre à cardans.

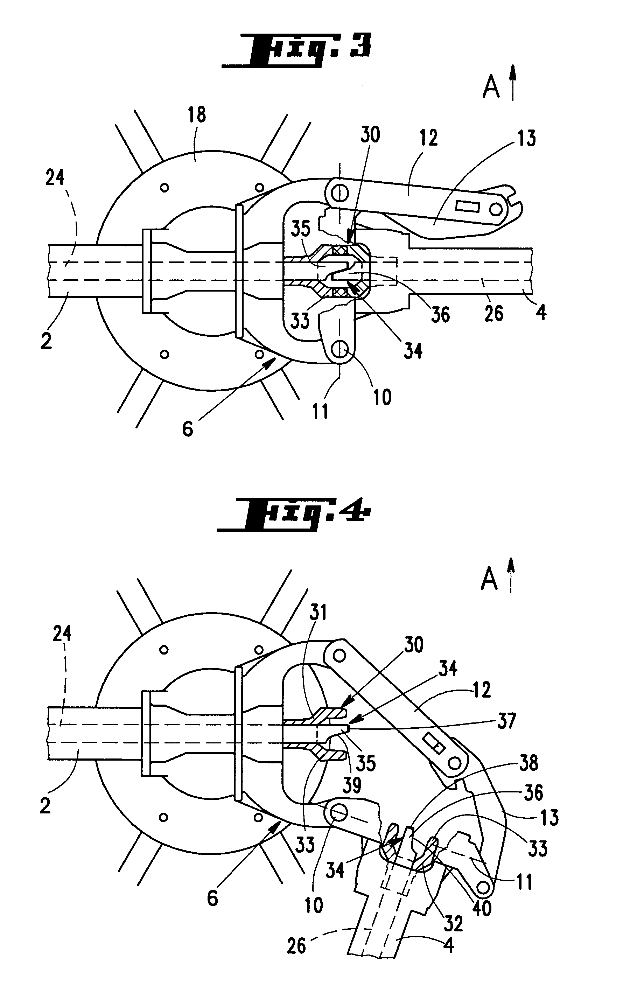

Au niveau de chaque articulation (5 ou 6) l'arbre de transmission (24) logé dans la partie centrale (2) et les arbres de transmission (25 et 26) qui se situent dans les parties latérales (3 et 4) sont reliés entre eux par des accouplements (29 et 30). Comme cela ressort notamment des figures 3 et 4, chacun de ces accouplements (29 et 30) est formé par deux coupleurs (31 et 32) sensiblement identiques, montés sur les extrémités en regard des arbres de transmission (24 et 25 ou 26). Ces coupleurs (31 et 32) comportent un grand nombre de doigts (33) horizontaux qui engrènent durant le travail. Ledit nombre peut varier. Il est de préférence compris entre quatre et huit. Dans l'exemple représenté chaque coupleur (31, 32) comporte six doigts (33) disposés en rond. Il existe ainsi six zones de contact entre les coupleurs (31 et 32) ce qui permet la transmission d'efforts très importants.

Chaque accouplement (29, 30) possède des moyens supplémentaires (34) pour la détermination de la position relative d'un des coupleurs (31, 32) par rapport à l'autre, lors de la mise en position de travail. Ces moyens (34) empêchent l'engrènement des doigts (33) des coupleurs (31 et 32) lorsqu'ils ne sont pas dans la position dans laquelle les outils (20) des bras (19) des rotors (16 et 17) des parties latérales (3 et 4) entrent correctement dans les intervalles entre les outils (20) des rotors (14 et 15) de la partie centrale (2). Il est également possible de se référer à la position de ces moyens (34) pour retrouver aisément la position où l'engrènement est correct.

Les moyens (34) se composent de parties saillantes (35 et 36) ayant des formes telles qu'elles s'emboîtent dans une position prédéterminée dans la position de travail. Ces parties saillantes (35 et 36) sont disposées sur les extrémités en regard des arbres de transmission (24 et 25 ou 26). Chacune de ces parties saillantes (35 et 36) est constituée par un prolongement de forme sensiblement semi-cylindrique de l'arbre de transmission (24, 25 et 26) correspondant. Ces parties saillantes (35 et 36) ont une longueur telle qu'elles se chevauchent dans la position de travail. Leur longueur peut être pratiquement égale à la longueur des doigts (33) des coupleurs (31 et 32).

La face avant (37, 38) de chaque partie saillante (35 et 36) a la forme d'un segment circulaire. Pour que les doigts (33) des coupleurs (31 et 32) des accouplements (29 et 30) puissent engrener lors du déplacement des parties latérales (3 et 4) dans la position de travail, il faut que les arbres de transmission (24 et 25 ou 26) soient positionnés de telle sorte que lesdites faces avant (37 et 38) des parties saillantes (35 et 36) correspondantes ne se rencontrent pas. Il est ainsi possible, par un positionnement correct des rotors (14 à 17) par rapport à ces mêmes arbres de transmission (24, 25 et 26), de faire en sorte que dans la position où l'engrènement précité des doigts (33) est possible et ce, quel que soit leur nombre, les outils (20) des rotors (16 et 17) des parties latérales (3 et 4) se placent automatiquement dans les intervalles entre les outils (20) des rotors (14 et 15) de la partie centrale (2).

Les parties saillantes (35 et 36) présentent par ailleurs des faces latérales planes (39 et 40) qui sont légèrement inclinées. Cela favorise les déplacements d'une des parties saillantes (35, 36) par rapport à l'autre.

Durant le travail, la faneuse est dans la position représentée sur la figure 1. Elle est déplacée dans la direction (A) au moyen du tracteur. Les rotors (14 à 17) sont alors sensiblement alignés. Ils sont entraînés en rotation autour de leurs axes supports (21) respectifs, de telle sorte qu'ils tournent deux à deux en convergence à l'avant (flèches F et F'), au moyen des arbres de transmission (24, 25 et 26). Lors de cette rotation, leurs outils (20) ramassent la totalité des végétaux qui se trouvent sur le sol dans la moitié avant de leurs trajectoires. Ensuite, ils déplacent ces végétaux vers l'arrière et les étalent à nouveau tout en provoquant leur retournement. Les roues d'appui (23) se déplacent sur le sol et font suivre les dénivellations aux rotors (14 à 17).

Pour le transport, les deux parties latérales (3 et 4) du bâti (1) sont repliées d'environ 90° vers l'arrière afin de réduire la largeur de la machine. Cette position est représentée sur la figure 2. Pour cela il faut débloquer les leviers (12 et 13) et pivoter ces parties latérales (3 et 4) autour des axes d'articulation sensiblement verticaux (10). Les coupleurs (32) qui sont liés aux arbres de transmission (25 et 26) logés dans les parties latérales (3 et 4) s'écartent alors des coupleurs (31) qui sont liés à l'arbre de transmission (24) logé dans la partie centrale (2). Leurs doigts (33) ne sont plus en engrènement. Les rotors (16 et 17) qui sont repliés peuvent alors légèrement tourner sur leurs axes supports (21). De ce fait, la position de leurs outils (20) par rapport à celle des outils (20) des rotors (14 et 15) de la partie centrale (2) peut se modifier.

Inversement, pour revenir dans la position de travail les parties latérales (3 et 4) sont déplacées vers l'avant autour des axes d'articulation (10) sensiblement verticaux. Lors de ces déplacements l'utilisateur veille simplement à ce que les parties saillantes (35 et 36) des arbres de transmission (24 et 25 ou 26) puissent se chevaucher. Pour cela il suffit de faire tourner légèrement les rotors (16 et 17) et les arbres de transmission (25 et 26) correspondants. Dès que ledit chevauchement est possible les doigts (33) de leurs coupleurs (31 et 32) respectifs peuvent engrener et les outils (20) des rotors (16 et 17) des parties latérales (3 et 4) se placent correctement entre ceux des rotors (14 et 15) de la partie centrale (2) du bâti (1). Dans cette position les parties latérales (3 et 4) peuvent à nouveau être bloquées par rapport à la partie centrale (2) au moyen des leviers (12 et 13).

Il est bien évident que l'invention n'est pas limitée au mode de réalisation décrit et représenté sur les dessins annexés. Des modifications sont possibles, notamment en ce qui concerne la constitution des divers éléments ou par substitution d'équivalents techniques, sans pour autant sortir du domaine de protection tel que défini dans les revendications.

## Revendications

1. Machine de fenaison, notamment une faneuse, comportant un bâti (1) de forme allongée qui porte plusieurs rotors (14 à 17) munis de bras porte-outils (19) qui s'étendent de telle sorte que leurs outils (20) pénètrent dans l'intervalle entre deux outils (20) de bras (19) du ou des rotors (14 à 17) voisins pour obtenir un recouvrement partiel de leurs trajectoires, lesdits rotors (14 à 17) étant entraînés en rotation durant le travail autour d'axes (21) sensiblement verticaux ou légèrement inclinés dans la direction d'avancement (A), de manière à tourner deux à deux en convergence à l'avant, au moyen d'arbres de transmission (24, 25, 26) logés dans le bâti (1), lequel bâti (1) se compose d'une partie centrale (2) et de parties latérales (3 et 4) articulées aux extrémités de la partie centrale (2) au moyen d'articulations ayant des axes (10) sensiblement verticaux autour desquels elles peuvent être repliées vers l'arrière pour le transport, lesdits arbres de transmission (24, 25, 26) qui servent à l'entraînement des rotors (14 à 17) étant reliés entre eux au niveau de ces axes d'articulation (10) des parties latérales (3, 4) du bâti (1) par des accouplements (29, 30) formés par deux coupleurs (31, 32) munis d'un grand nombre de doigts d'entraînement (33) qui engrènent durant le travail et qui sont écartés les uns des autres lorsque les parties latérales (3, 4) du bâti (1) sont repliées pour le transport, ***caractérisée par le fait que*** chacun des accouplements (29 et 30) entre les arbres de transmission (24, 25, 26) possède des moyens (34) de détermination de la position relative d'un coupleur (31, 32) par rapport à l'autre coupleur correspondant, lesquels moyens (34) se composent de parties saillantes (35, 36) disposées dans le prolongement des extrémités en regard des arbres de transmission (24, 25 et 26) et ayant des formes qui leur permettent de s'emboîter dans une position prédéterminée dans laquelle les doigts (33) des coupleurs (31, 32) peuvent engrener correctement lors de la mise en position de travail, de façon à assurer que les outils (20) des bras (19) de chaque rotor (14 à 17) entrent correctement dans les intervalles entre les outils (20) des rotors (14 à 17) voisins.

2. Machine de fenaison selon la revendication 1, ***caractérisée par le fait que*** les parties saillantes (35, 36) sont constituées par des prolongements de forme sensiblement semi-cylindrique des extrémités en regard des arbres de transmission (24, 25 et 26).

3. Machine de fenaison selon la revendication 1, ***caractérisée par le fait que*** la longueur des parties saillantes (35, 36) des arbres de transmission (24, 25 et 26) est telle qu'elles se chevauchent dans la position de travail.

4. Machine de fenaison selon la revendication 1, ***caractérisée par le fait que*** la longueur des parties saillantes (35 et 36) est sensiblement égale à la longueur des doigts (33) des coupleurs (31 et 32).

5. Machine de fenaison selon la revendication 3, ***caractérisée par le fait que*** la face avant (37, 38) de chaque partie saillante (35, 36) à la forme d'un segment circulaire.

6. Machine de fenaison selon la revendication 3, ***caractérisée par le fait que*** chaque partie saillante (35, 36) comporte une face latérale plane (39, 40) légèrement inclinée.

## Patentansprüche

1. Heuwerbungsmaschine, insbesondere Zetter, mit einem länglich ausgebildeten Rahmen (1), der mehrere Rotoren (14 bis 17) trägt, die mit Werkzeugtragarmen (19) versehen sind, die sich so erstrecken, daß ihre Werkzeuge (20) in den Zwischenraum zwischen zwei Werkzeugen (20) von Armen (19) des oder der benachbarten Rotoren (14 bis 17) eintreten, um eine teilweise Überlappung ihrer Bahnen zu erreichen, wobei die Rotoren (14 bis 17) im Betrieb mittels im Rahmen (1) aufgenommenen Kraftübertragungswellen (24, 25, 26) um im wesentlichen vertikale oder leicht in Fahrtrichtung (A) geneigte Achsen (21) drehangetrieben werden, so daß sie sich paarweise konvergierend vorwärtsdrehen, wobei der Rahmen (1) aus einem mittleren Teil (2) und Seitenteilen (3 und 4), die mittels Gelenken mit im wesentlichen vertikalen Achsen (10), um die sie für den Transport nach hinten geklappt werden können, an den Enden des mittleren Teils (2) angelenkt sind, wobei die zum Antrieb der Rotoren (14 bis 17) dienenden Kraftübertragungswellen (24, 25, 26) in unmittelbarer Nähe von diesen Gelenkachsen (10) der Seitenteile (3, 4) des Rahmens (1) durch Kupplungsvorrichtungen (29, 30) miteinander verbunden sind, die durch zwei Kupplungsstücke (31, 32) gebildet werden, welche mit einer Vielzahl von Antriebsfingern (33) versehen sind, die im Betrieb in Eingriff stehen und die voneinander beabstandet sind, wenn die Seitenteile (3, 4) des Rahmens (1) für den Transport eingeklappt sind, ***dadurch gekennzeichnet,* daß** jede der Kupplungsvorrichtungen (29 und 30) zwischen den Kraftübertragungswellen (24, 25, 26) Mittel (34) zur Bestimmung der relativen Position eines Kupplungsstücks (31, 32) bezüglich des anderen entsprechenden Kupplungsstücks aufweist, wobei die Mittel (34) aus vorstehenden Teilen (35, 36) bestehen, die in der Verlängerung der gegenüber liegenden Enden der Kraftübertragungswellen (24, 25 und 26) angeordnet sind und eine solche Form aufweisen, die es ihnen gestattet, in einer vorbestimmten Position ineinander einzugreifen, in der die Finger (33) der Kupplungsstücke (31, 32) bei der Positionierung in Arbeitsstellung ordnungsgemäß in Eingriff gelangen können, so daß gewährleistet wird, daß die Werkzeuge (20) der Arme (19) jedes Rotors (14 bis 17) ordnungsgemäß in die Zwischenräume zwischen den Werkzeugen (20) der benachbarten Rotoren (14 bis 17) eintreten.

2. Heuwerbungsmaschine nach Anspruch 1, ***dadurch gekennzeichnet,* daß** die vorstehenden Teile (35, 36) aus im wesentlichen halbzylindrisch ausgebildeten Verlängerungen der gegenüber liegenden Enden der Kraftübertragungswellen (24, 25 und 26) bestehen.

3. Heuwerbungsmaschine nach Anspruch 1, ***dadurch gekennzeichnet,* daß** die Länge der vorstehenden Teile (35, 36) der Kraftübertragungswellen (24, 25 und 26) derart ist, daß sie sich in Arbeitsstellung überlappen.

4. Heuwerbungsmaschine nach Anspruch 1, ***dadurch gekennzeichnet*, daß** die Länge der vorstehenden Teile (35 und 36) im wesentlichen gleich der Länge der Finger (33) der Kupplungsstücke (31 und 32) ist.

5. Heuwerbungsmaschine nach Anspruch 3, ***dadurch gekennzeichnet,* daß** die Vorderfläche (37, 38) jedes vorstehenden Teils (35, 36) die Form eines Kreissegments aufweist.

6. Heuwerbungsmaschine nach Anspruch 3, ***dadurch gekennzeichnet,* daß** jeder vorstehende Teil (35, 36) eine leicht geneigte, ebene Seitenfläche (39, 40) aufweist.

## Claims

1. Haymaking machine, especially a tedder, comprising a frame (1) of elongate shape which carries several rotors (14 to 17) fitted with tool carrying arms (19) which extend in such a way that their tools (20) enter the gap between two tools (20) of the arms (19) of the adjacent rotor or rotors (14 to 17) to obtain partial overlap of their paths, the said rotors (14 to 17) being rotationally driven during work about axes (21) which are substantially vertical or slightly inclined in the direction of forward travel (A) to rotate two by two converging at the front, by means of transmission shafts (24, 25, 26) housed in the frame (1), which frame (1) is made up of a central part (2) and of lateral parts (3 and 4) articulated to the ends of the central part (2) by means of articulations, the axes (10) of which are substantially vertical and about which they can be folded back for transport, the said transmission shafts (24, 25, 26) which serve to drive the rotors (14 to 17) being connected to one another in the vicinity of these axes (10) of articulation of the lateral parts (3, 4) of the frame (1) by couplings (29, 30) formed by two couplers (31, 32) equipped with a great number of drive fingers (33) which mesh during work and are held apart from one another when the lateral parts (3, 4) of the frame (1) are folded for transport, ***characterized in* that** each of the couplings (29 and 30) between the transmission shafts (24, 25, 26) has means (34) for determining the relative position of one coupler (31, 32) with respect to the other corresponding coupler, which means (34) are made up of projecting parts (35, 36) arranged in the continuation of the facing ends of the transmission shafts (24, 25 and 26) and which have shapes which allow them to fit together in a predetermined position in which the fingers (33) of the couplers (31, 32) can mesh correctly upon the transfer into the working position so as to make sure that the tools (20) of the arms (19) of each rotor (14 to 17) correctly enter the gaps between the tools (20) of the adjacent rotors (14 to 17).

2. Haymaking machine according to Claim 1, ***characterized in* that** the projecting parts (35, 36) consist of extensions of substantially semicylindrical shape of the facing ends of the transmission shafts (24, 25 and 26).

3. Haymaking machine according to Claim 1, ***characterized in* that** the length of the projecting parts (35, 36) of the transmission shafts (24, 25 and 26) is such that they overlap in the working position.

4. Haymaking machine according to Claim 1, ***characterized in* that** the length of the projecting parts (35 and 36) is substantially equal to the length of the fingers (33) of the couplers (31 and 32).

5. Haymaking machine according to Claim 3, ***characterized in* that** the front face (37, 38) of each projecting part (35, 36) has the shape of a circular segment.

6. Haymaking machine according to Claim 3, ***characterized in* that** each projecting part (35, 36) has a slightly inclined flat lateral face (39, 40).
